# EUROPÄISCHE PATENTSCHRIFT

(11) **EP 2 687 296 B1**
(45) Veröffentlichungstag und Bekanntmachung des Hinweises auf die Patenterteilung: **24.05.2017**
(21) Anmeldenummer: 13175729.6
(22) Anmeldetag: 09.07.2013
(51) Int. Cl.: B05B 3/04, B05B 3/16, B05B 13/06, B08B 9/08, B08B 9/093, B29C 51/02

(54) **Reinigungseinrichtung für die Innenwandreinigung von Behältern**
Cleaning assembly for cleaning of the inner walls of containers
Dispositif de nettoyage pour le nettoyage des parois intérieures de récipients

(30) Priorität: 20.07.2012 DE 102012106608
(43) Veröffentlichungstag der Anmeldung: 22.01.2014
(73) Patentinhaber: Hammelmann Maschinenfabrik GmbH, 59302 Oelde (DE)
(72) Erfinder: Schöning, Paul, 48361 Beelen (DE); Jarchau, Michael, 59302 Oelde (DE)
(74) Vertreter: Dantz, Jan Henning

(56) Entgegenhaltungen:
- EP-A1- 0 172 689
- GB-A- 1 188 693
- US-A- 3 379 379
- US-A- 4 944 457

## Beschreibung

Die Erfindung betrifft eine Reinigungseinrichtung für die Innenwandreinigung von Behältern nach dem Oberbegriff des Anspruchs 1.

Solche Reinigungseinrichtungen kommen vorrangig zum Einsatz, um insbesondere harte Verkrustungen auf den Innenflächen von Behälterwänden, wie Tanks oder dergleichen zu lösen.

Dabei wird der Düsenkopf ebenso wie der Düsenhalter der Reinigungseinrichtung, hydraulisch durch die unter Druck stehende Flüssigkeit bewegt, mit der der Abtrag der wandseitigen Verschmutzung erfolgt, wobei die Flüssigkeit, üblicherweise Wasser, unter einem Druck bis zu etwa 2000 bar steht.

Eine Reinigungseinrichtung ist aus der DE 35 23 386 A1 bekannt. Bei dieser Reinigungseinrichtung weist der Düsenhalter zwei Arme auf, die jeweils mit einer Düse bestückt sind, deren austretende Wasserstrahlen durch die Drehbewegung des Düsenkopfes sowie die des Düsenhalters in vertikaler und horizontaler Richtung wirksam sind, d.h. auf den abzutragenden Belag auftreffen.

Sowohl der Düsenhalter wie auch der Düsenkopf rotieren jeweils um ihre Drehachse über die gesamte Einsatzdauer.

Aufgrund der Rotationsbewegung wird allerdings immer nur ein relativ geringer Bereich bestrahlt, in dem die Abtragskraft des Wasserstrahls wirksam ist. Außerhalb dieses Wirkbereichs bleibt diese Abtragskraft ungenutzt.

Da der Flüssigkeitsdruck kontinuierlich aufgebracht werden muss, auch um sowohl den Düsenkopf wie auch den Düsenhalter drehend zu bewegen, ergibt sich bei der bekannte Konstruktion ein außerordentlich niedriger Wirkungsgrad. Bei dem erforderlichen Energieeintrag stellt dies naturgemäß eine Situation dar, die den stets gestellten Forderungen nach einer Betriebsoptimierung diametral entgegensteht.

In der EP 0 172 689 A1 ebenso wie in der GB 1 188 693 A sind gattungsgemäße Reinigungungseinrichtungen offenbart, bei denen die Antriebswelle und der Düsenkopf über ein Getriebe reversierend schwenkbar sind. Dabei zeigt die GB 1 188 693 A die technischen Merkmale des Oberbegriffs des Anspruchs 1. Der Erfindung liegt die Aufgabe zugrunde, eine Reinigungseinrichtung der gattungsgemäßen Art so weiterzuentwickeln, dass ihr Energieverbrauch gesenkt wird und die Betriebskosten minimiert werden. Diese Aufgabe wird durch eine Reinigungseinrichtung mit den Merkmalen des Anspruchs 1 gelöst.

Die Antriebswelle und damit der Düsenhalter ist über ein Getriebe reversierend schwenkbar. Bevorzugt ist dabei der Schwenkwinkel einstellbar, je nach maßlicher Gegebenheit der Behälter. Eine hohe Effizienz wird dann erreicht, wenn der Schwenkwinkel kleiner 180° ist, vorzugsweise zwischen 30° und 120°. Während die Schwenkebene des Düsenhalters vertikal ausgerichtet ist, wird dieser durch Verdrehung des Düsenkopfes auch in horizontaler Richtung bewegt, wobei nach einem weiteren Gedanken der Erfindung auch der Düsenkopf reversierend schwenkbar ist, wozu ebenso wie zur Schwenkbewegung des Düsenhalters gleichfalls ein Getriebe vorgesehen ist.

Diese reversierende Verschwenkung des Düsenkopfes erfolgt bevorzugt dann, wenn die Innenwand eines Behälters mit einem relativ großen Durchmesser gereinigt werden soll, bei dem die Reinigungseinrichtung entsprechend weit außerhalb der Mittelachse des Behälters positioniert ist.

Auch diese Schwenkbewegung des Düsenkopfes erfolgt bevorzugt in einem Winkelbereich kleiner 180°, wobei dieser Winkelbereich entsprechend den Gegebenheiten zur Optimierung des Abtrags frei einstellbar ist.

Wie sich überraschend gezeigt hat, kann eine Leistungssteigerung von mehr als 300 % erreicht werden. Das bedeutet bei gleicher Leistung wie bisher einen entsprechend geringen Energieeinsatz. Überdies ist die Reinigungszeit und damit die Unterbrechungszeit zur Nutzung des jeweiligen Behälters erheblich verkürzt, mit der Folge entsprechend reduzierter Betriebskosten.

Als Getriebe für den reversierenden Antrieb sowohl des Düsenhalters wie auch des Düsenkopfes ist nach der Erfindung jeweils ein Koppelgetriebe vorgesehen, das als Scheiben-Koppelgetriebe ausgebildet ist, wobei eine Kurbelscheibe vom hydraulischen Antrieb rotierend angetrieben wird, während eine andere, die reversierende Schwenkbewegung vollführende, einen Antrieb für die Antriebswelle bzw. den Düsenkopf bildet. Bei letzterer ist die Kurbellänge größer als die der rotierenden Kurbelscheibe, wobei an beiden jeweils außermittig ein Pleuel angreift, die über ein starres Koppelglied miteinander verbunden sind. Dieses Koppelglied ist als zweiarmiger Hebel ausgebildet, dessen Drehachse verstellbar ist, so dass der Schwenkwinkel der Antriebswelle und damit des Düsenhalters entsprechend den Anforderungen eingestellt werden kann.

Für eine Drehzahlveränderung des Düsenkopfantriebs ist eine Bremse vorgesehen, beispielsweise eine Wirbelstrombremse, die mit dem zentralen Hydraulikantrieb in Wirkverbindung steht.

Zur konstruktiven Vereinfachung sind, im Gegensatz zum Stand der Technik, bei dem zur Erzeugung eines Drehmomentes die beiden sich gegenüberliegenden Düsen versetzt zueinander angeordnet sind, die beiden Düsen gegensinnig fluchtend ausgerichtet, wobei zum Antrieb des Düsenhalters ein Hilfsdrehantrieb vorgesehen ist, der über das zugeführte Druckwasser mit geringer Leistung gespeist werden kann. Denkbar ist auch, den Hilfsdrehantrieb elektrisch, beispielsweise durch Batterien, oder pneumatisch anzutreiben.

Mit der Erfindung wird weiterhin ein Verfahren zur Beseitigung einer Ablagerung an einer Fläche mittels der Reinigungseinrichtung möglich, die einen Düsenkopf aufweist, an dem ein rotierender Düsenhalter mit mindestens einer Radialdüse angeordnet ist, aus der in einem Strahl eine Reinigungsflüssigkeit, vorzugsweise Wasser, unter Druck austritt und auf die Ablagerung auftrifft.

Nach einem partiellen flächigen Abtrag der Ablagerung wird der Düsenkopf gegen die gereinigte Fläche gedrückt und die benachbarten Ablagerungen mit den seitlich am Düsenhalter und quer zur Drehachse angeordneten Radialdüsen abgetragen.

Der Druck, mit dem der Düsenkopf an die gereinigte Fläche gedrückt wird, wird durch eine Rückstoßdüse aufgebracht, deren Wirkrichtung senkrecht zur gereinigten Fläche verläuft.

Zur Abstützung des Düsenkopfes an der Fläche ist am Düsenarm ein Widerlager, vorzugsweise in Form eines Kugelabschnitts, angeordnet, das ein minimales Auflager bildet.

Die Radialdüsen sind in ihrer Neigung hin zur Fläche veränderbar und somit auf die Dicke der abzutragenden Ablagerung einstellbar.

Zum partiellen flächigen Abtrag der Ablagerung, durch den eine Stützfläche für den Düsenkopf geschaffen wird, sind entgegengesetzt zur Rückstoßdüse wirksame Axialdüsen vorgesehen, die um die Drehachse des Düsenarmes rotieren und außerhalb des Stützkörpers angeordnet sind. Bevorzugt sind zwei solche Axialdüsen vorgesehen.

Zur Rotation des Düsenarmes sind die seitlichen, gegensinnig ausgerichteten Radialdüsen, bezogen auf die Rotationsachse, versetzt zueinander angeordnet, wodurch sich durch die Rückstoßkräfte der austretenden Reinigungsflüssigkeit ein Drehmoment ergibt, durch das der Düsenarm in eine Drehbewegung versetzt wird.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Reinigungseinrichtung nach Anspruch 1 in einer Seitenansicht (ohne Getriebeabdeckung)
- Figur 2: die Reinigungseinrichtung in einer Vorderansicht
- Figur 3: einen Teilausschnitt der Reinigungseinrichtung in einer teilweise geschnittenen Vorderansicht in einer Funktionsstellung
- Figur 4: einen Teilausschnitt nach Figur 3 in einer anderen Funktionsstellung
- Figur 5: eine geschnittene Draufsicht auf die Reinigungseinrichtung.

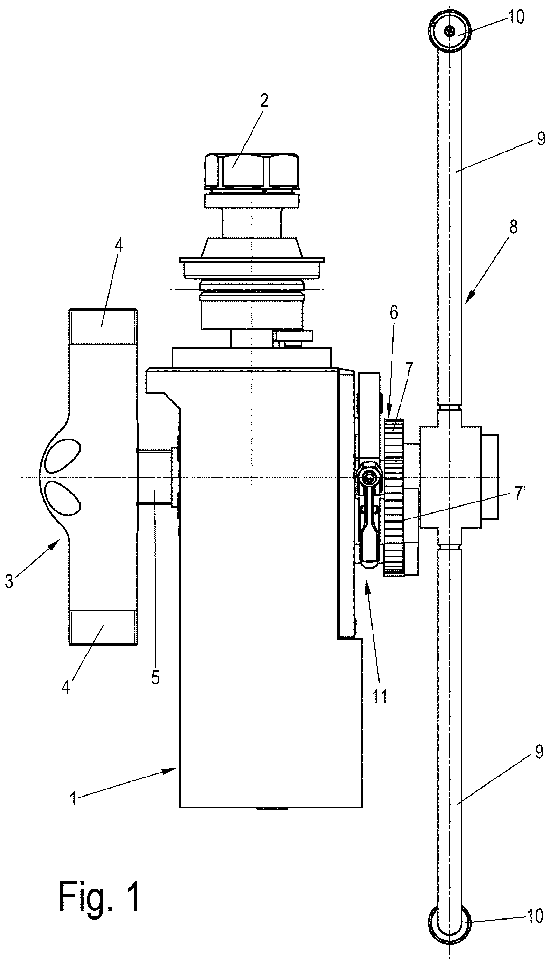

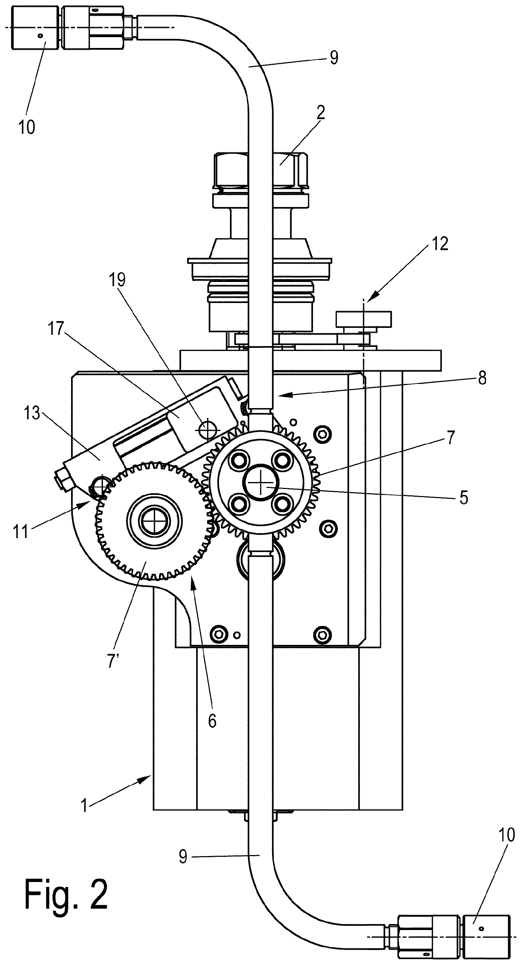

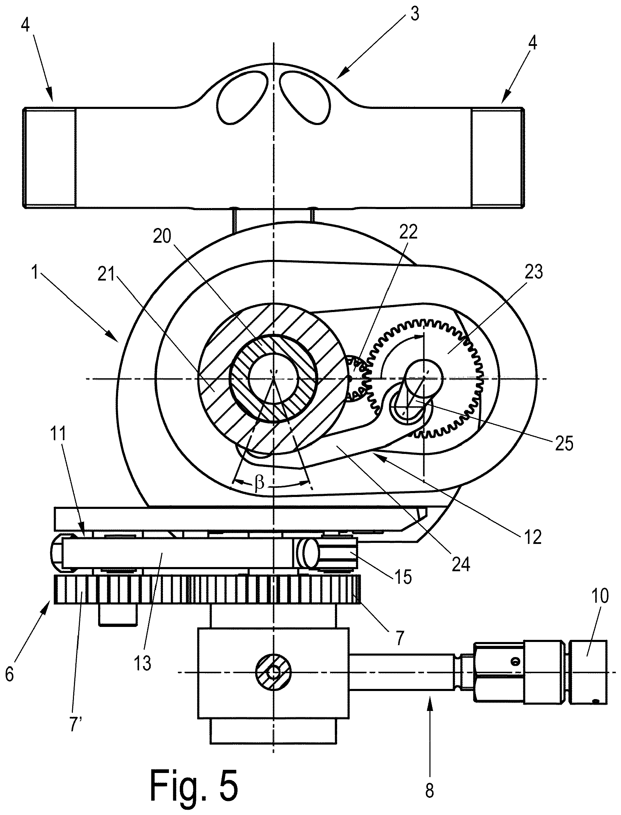

In den Figuren 1-5 ist eine Reinigungseinrichtung für die Innenreinigung von Behältern mit einer unter Druck stehenden Flüssigkeit dargestellt, die in Funktion aus mindestens einer, in einem Arm eines Düsenhalters 3 gehaltenen Düsen 4 austritt, wobei der Düsenhalter 3 an einer drehbaren Antriebswelle 5 befestigt ist. Diese Antriebswelle 5 ist in einem um eine quer dazu verlaufende Achse 20 (Figur 5) drehbaren Düsenkopf 1 gelagert. Die Antriebswelle 5 ist über ein Getriebe 11 reversierend schwenkbar.

Insbesondere in der Figur 1 ist erkennbar, dass der Düsenhalter 3 zwei gegensinnig und fluchtend zueinander verlaufende Arme mit endseitig angeschlossenen Düsen 4 aufweist.

Zum Antrieb der Antriebswelle 5 ist ein hydraulischer Hilfsdrehantrieb 8 auf der dem Düsenhalter 3 gegenüberliegenden Seite des Düsenkopfes 1 angeordnet, mit zwei Antriebsarmen 9, die gegensinnig abgewinkelte Düsen 10 aufweisen zur Erzeugung eines Rückstoßes. Dabei wird der Hilfsdrehantrieb 8 durch die unter Druck stehende Flüssigkeit angetrieben, die als Reinigungsflüssigkeit fungiert und die über eine Zuleitung 33 (Figur 10) und einen Druckwasseranschluss 2 zugeführt wird.

Die Übertragung der Drehbewegung vom Hilfsdrehantrieb 8 auf die Antriebswelle 5 erfolgt über ein Zahnradgetriebe 6, das zwei miteinander kämmende Zahnräder 7, 7' aufweist, wobei das abtreibende Zahnrad 7' eine Kurbelscheibe 16 des Getriebes 11 dreht und an die ein Pleuel 14 angeschlossen ist.

Dieser Pleuel 14 ist Bestandteil des Getriebes 11, das im Sinne eines Koppeltriebs ausgebildet ist und mit dem die Antriebswelle 5 reversierend verdrehbar ist.

Hierzu ist am anderen Ende des Pleuels 14 ein Koppelglied 13 angeschlossen, zur Verbindung und Bewegungsübertragung auf ein Pleuel 15, das als Kurbel mit der Antriebswelle 5 verbunden ist.

Während die Kurbelscheibe 16 im Betrieb rotiert, d.h. sich vollumfänglich dreht, vollführt der Pleuel 15 und damit die Antriebswelle 5 lediglich eine Schwenkbewegung innerhalb eines Schwenkwinkels α.

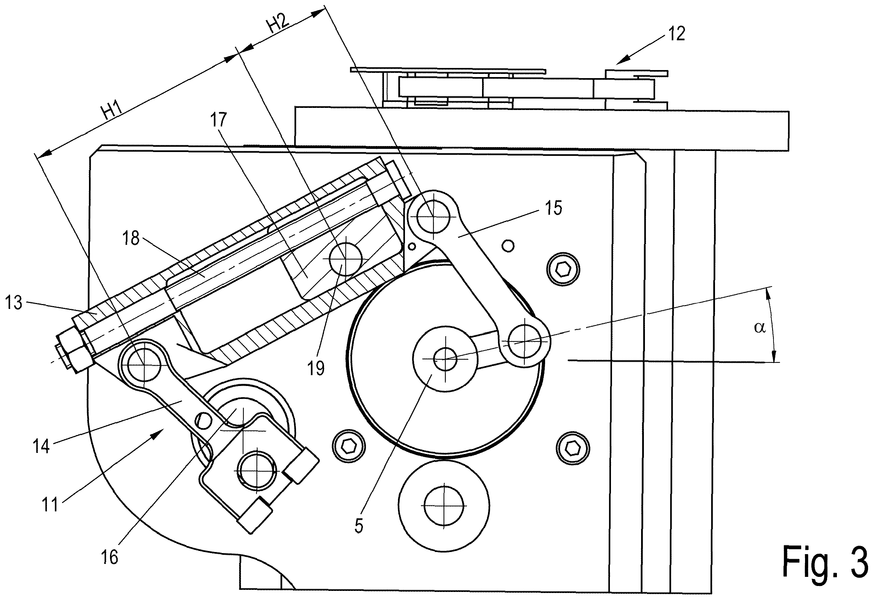

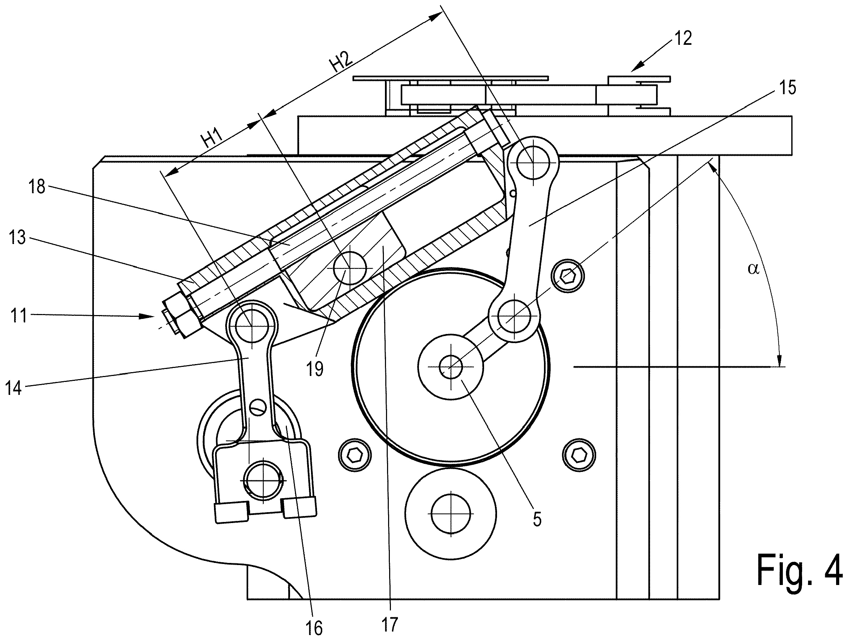

In den Figuren 3 und 4 ist jeweils ein unterschiedlicher Schwenkwinkel α dargestellt. Dieser wird bestimmt durch den einstellbaren Abstand der beiden Gelenkpunkte der Pleuel 14, 15 zu einem Drehzapfen 19, um den das als zweiarmiger Hebel ausgebildete Koppelglied 13 verschwenkt wird.

Ein Abstand H1 zwischen dem Anschluss des Pleuels 14 am Koppelglied 13 und dem Drehzapfen 19 ist bei dem in der Figur 3 gezeigten Beispiel größer als ein Abstand H2 zwischen den Drehzapfen 19 und dem Gelenkpunkt des Pleuels 15 am Koppelglied 13.

Zur Veränderung der Abstände H1 und H2 ist ein Spindeltrieb vorgesehen, mit einer im Koppelglied 13 geführten und verdrehbar gehaltenen Gewindespindel 18, auf deren Gewindebereich eine Spindelmutter 17 gelagert ist, die ortsfest, jedoch verdrehbar am Drehzapfen 19 angeordnet ist.

Durch Drehen der Spindel 8 verändern sich, wie erwähnt, die Abstände H1 und H2 mit der Folge, dass der Schwenkwinkel α der Antriebswelle 5 kleiner oder größer wird.

Während in der Figur 3 der kleinstmögliche Schwenkwinkel α dargestellt ist, bei dem die Spindelmutter 17 in Richtung des Pleuels 15 eine Endstellung einnimmt, ist in der Figur 4 der maximal größte Schwenkwinkel α dargestellt, wobei hier die Spindelmutter 17 in Richtung des Pleuels 14 eine Endstellung im Koppelglied 13 einnimmt.

Das Koppelglied 13 weist eine Führungsausnehmung auf, in der die Spindelmutter 17 derart geführt ist, dass eine problemlose Verschiebung des Koppelgliedes 13 möglich ist.

Im Bedarfsfall soll auch der Düsenkopf 1 reversierend verschwenkbar sein. Hierzu ist im oberen, d.h. dem Druckwasseranschluss 2 zugewandten Bereich des Düsenkopfes 1 ebenfalls ein Getriebe 12 vorgesehen, das über zwei Zahnräder 22, 23 angetrieben wird, wobei ein abgetriebenes Zahnrad 23 in Funktion vergleichbar mit der Kurbelscheibe 16 eine Kurbel 25 aufweist, an die ein Koppelglied 24 angreift, das mit einer Antriebsscheibe 21 in Verbindung steht und zwar derart, dass eine Bewegung um den Schwenkwinkel β erfolgt. Im Übrigen steht das antreibende Zahnrad 22 mit dem Hilfsdrehantrieb 8 in Wirkverbindung.

### Bezugszeichenliste

- 1: Düsenkopf
- 2: Druckwasseranschluss
- 3: Düsenhalter
- 4: Düse
- 5: Antriebswelle
- 6: Zahnradgetriebe
- 7: Zahnrad
- 7': Zahnrad
- 8: Hilfsdrehantrieb
- 9: Antriebsarm
- 10: Antriebsdüse
- 11: Getriebe
- 12: Getriebe
- 13: Koppelglied
- 14: Pleuel
- 15: Pleuel
- 16: Kurbelscheibe
- 17: Spindelmutter
- 18: Spindel
- 19: Drehzapfen
- 20: Achse
- 21: Antriebsscheibe
- 22: Zahnrad
- 23: Zahnrad
- 24: Koppelglied
- 25: Kurbel

## Patentansprüche

1. Reinigungseinrichtung für die Innenwandreinigung von Behältern mit einer unter Druck stehenden Flüssigkeit, die in Funktion aus mindestens einer, in einem Arm eines Düsenhalters (3) gehaltenen Düse (4) austritt, wobei der Düsenhalter (3) an einer drehbaren Antriebswelle (5) befestigt ist, die in einem um eine quer zur Antriebswelle (5) verlaufende Achse (20) drehbaren Düsenkopf (1) gelagert ist, wobei die Antriebswelle (5) und der Düsenkopf (1) über jeweils ein Getriebe reversierend schwenkbar sind, **dadurch gekennzeichnet, dass** an ein erstes Getriebe (11) als Antrieb des Düsenhalters (3) ein Hilfsantrieb (8) angeschlossen ist und dass das die Antriebswelle (5) reversierend schwenkende erste Getriebe (11) als Koppelgetriebe ausgebildet ist, wobei an eine vollumfänglich angetriebene Kurbelscheibe (16) ein Pleuel (14) angeschlossen ist, der mit einem Koppelglied (13) gelenkig verbunden ist, an dem andererseits ein Pleuel (15) angeschlossen ist, der mit der Antriebswelle (5) in Verbindung steht und dass ein den Düsenkopf (1) reversierend schwenkendes zweites Getriebe (12) als Koppelgetriebe ausgebildet ist und ein von einem Antriebszahnrad (22) angetriebenes Zahnrad (23) aufweist, das vollumfänglich dreht und an dem eine Kurbel (25) angeschlossen ist, die mit einem Koppelglied (24) verbunden ist, das andererseits an einer Antriebsscheibe (21) befestigt ist.

2. Reinigungseinrichtung nach Anspruch 1, **dadurch gekennzeichnet, dass** die Kurbelscheibe (16) durch den Hilfsdrehantrieb (8) antreibbar ist.

3. Reinigungseinrichtung nach Anspruch 1, **dadurch gekennzeichnet, dass** das Koppelglied (13) als zweiarmiger Hebel ausgebildet und auf einem Drehzapfen (19) verschwenkbar gelagert ist, wobei der Abstand der Pleuel (14, 15) zum Drehzapfen (19) veränderbar ist.

4. Reinigungseinrichtung nach Anspruch 3, **dadurch gekennzeichnet, dass** auf dem Drehzapfen (19) eine Spindelmutter (17) gelagert ist, die mit einer Gewindespindel (18) des Koppelgliedes (13) verbunden ist, wobei die Gewindespindel (18) im Koppelglied (13) verdrehbar ist.

5. Reinigungseinrichtung nach einem der vorhergehenden Ansprüche, **dadurch gekennzeichnet, dass** der Düsenhalter (3) zwei jeweils eine Düse (4) tragende Arme aufweist, die gegensinnig und fluchtend zueinander ausgerichtet sind.

6. Reinigungseinrichtung nach Anspruch 1, **dadurch gekennzeichnet, dass** der Hilfsdrehantrieb (8) elektrisch, pneumatisch oder hydraulisch antreibbar ist.

7. Reinigungseinrichtung nach einem der vorhergehenden Ansprüche, **dadurch gekennzeichnet, dass** der Hilfsdrehantrieb (8) mindestens zwei an abgewinkelten Antriebsarmen (9) gegensinnig verlaufende Rückstoßdüsen (10) aufweist und über ein Zahnradgetriebe (6) mit der Kurbelscheibe (16) verbunden ist und über die unter hohem Druck stehende Flüssigkeit gespeist wird.

## Claims

1. A cleaning device for cleaning inner walls of containers using a pressurized liquid which emerges from at least one nozzle (4) held in an arm of a nozzle holder (3) when functioning, wherein the nozzle holder (3) is fastened to a rotatable drive shaft (5) which is mounted in a nozzle head (1) rotatable about an axis (20) running transversely to the drive shaft (5), wherein the drive shaft (5) and the nozzle head (1) are reversibly pivotable by means of one gear mechanism in each case, **characterized in that** an auxiliary drive (8) is connected to a first gear mechanism (11) as drive of the nozzle holder (3) and that the first gear mechanism (11) which reversibly pivots the drive shaft (5) is configured as a coupling gear mechanism, wherein a connecting rod (14) is connected to a crank disk (16) driven over its entire circumference, which connecting rod is connected in an articulated manner to a coupling member (13) to which a connecting rod (15) is connected on the other hand, which connecting rod is in communication with the drive shaft (5) and that a second gear mechanism (12) which reversibly pivots the nozzle head (1) is configured as a coupling gear mechanism and has a toothed gear (23) driven by a driving toothed gear (22) which turns over its full circumference and to which a crank (25) is connected which is connected to a coupling member (24) which on the other hand is fastened to a drive disk (21).

2. The cleaning device according to claim 1, **characterized in that** the crank disk (16) can be driven by the auxiliary rotary drive (8).

3. The cleaning device according to claim 1, **characterized in that** the coupling member (13) is configured as a two-armed lever and is pivotably mounted on a rotation pin (19), wherein the distance of the connecting rods (14, 15) to the rotation pin (19) is variable.

4. The cleaning device according to claim 3, **characterized in that** a spindle nut (17) is mounted on the rotation pin (19) which nut is connected to a threaded spindle (18) of the coupling member (13), wherein the threaded spindle (18) can be turned in the coupling member (13).

5. The cleaning device according to any one of the preceding claims, **characterized in that** the nozzle holder (3) has two arms each carrying a nozzle (4) which are aligned in opposite directions and in alignment with one another.

6. The cleaning device according to claim 1, **characterized in that** the auxiliary rotary drive (8) can be driven electrically, pneumatically or hydraulically.

7. The cleaning device according to any one of the preceding claims, **characterized in that** the auxiliary rotary drive (8) has at least two recoil nozzles (10) running in opposite directions on angled drive arms (9) and is connected via a gear mechanism (6) to the crank disk (16) and is supplied with liquid under high pressure.

## Revendications

1. Dispositif de nettoyage pour le nettoyage des parois intérieures de récipients avec un liquide sous pression qui, en fonctionnement, sort d'au moins une buse (4) maintenue dans un bras d'un porte-buse (3), le porte-buse (3) étant fixé à un arbre d'entraînement rotatif (5) qui est monté dans une tête de buse (1) pouvant tourner autour d'un axe (20) s'étendant transversalement par rapport à l'arbre d'entraînement (5), l'arbre d'entraînement (5) et la tête de buse (1) pouvant pivoter de manière réversible au moyen d'un mécanisme de transmission respectif, **caractérisé en ce qu'**un entraînement auxiliaire (8) est raccordé à un premier mécanisme de transmission (11) pour l'entraînement du porte-buse (3) et que le premier mécanisme de transmission (11) faisant pivoter de manière réversible l'arbre d'entraînement (5) est réalisé sous la forme d'un mécanisme de transmission à manivelle, une bielle (14) étant raccordée à un flasque de manivelle (16) entraîné sur toute sa circonférence et reliée de manière articulée à un élément d'accouplement (13) auquel est raccordée, d'autre part, une bielle (15) qui est reliée à l'arbre d'entraînement (5), et **en ce qu'**un deuxième mécanisme de transmission (12) faisant pivoter de manière réversible la tête de buse (1) est réalisé sous la forme d'un mécanisme de transmission à manivelle et présente une roue dentée (23) entraînée par une roue dentée d'entraînement (22), qui tourne sur toute sa circonférence et à laquelle est raccordée une manivelle (25) qui est reliée à un élément d'accouplement (24) qui est fixé d'autre part à une poulie d'entraînement (21).

2. Dispositif de nettoyage selon la revendication 1, **caractérisé en ce que** le flasque de manivelle (16) peut être entraîné par l'entraînement rotatif auxiliaire (8).

3. Dispositif de nettoyage selon la revendication 1, **caractérisé en ce que** l'élément d'accouplement (13) est réalisé sous la forme d'un levier à deux bras et monté pivotant sur un pivot (19), la distance entre les bielles (14, 15) et le pivot (19) étant modifiable.

4. Dispositif de nettoyage selon la revendication 3, **caractérisé en ce qu'**est monté sur le pivot (19) un écrou de broche (17) qui est relié à une broche filetée (18) de l'élément d'accouplement (13), la broche filetée (18) pouvant tourner dans l'élément d'accouplement (13).

5. Dispositif de nettoyage selon l'une des revendications précédentes, **caractérisé en ce que** le porte-buse (3) présente deux bras portant chacun une buse (4), qui sont orientés dans des sens opposés et dans l'alignement l'un de l'autre.

6. Dispositif de nettoyage selon la revendication 1, **caractérisé en ce que** l'entraînement rotatif auxiliaire (8) peut être entraîné par voie électrique, pneumatique ou hydraulique.

7. Dispositif de nettoyage selon l'une des revendications précédentes, **caractérisé en ce que** l'entraînement rotatif auxiliaire (8) présente au moins deux buses à réaction (10) s'étendant dans des sens opposés sur des bras d'entraînement coudés (9), est relié au flasque de manivelle (16) par l'intermédiaire d'un mécanisme de transmission à engrenage (6) et est alimenté par le liquide sous haute pression.
